**Europäisches Patentamt**

**European Patent Office**

**Office européen des brevets**

(19)

(11) **EP 1 181 668 B1**

(12) **FASCICULE DE BREVET EUROPEEN**

(45) Date de publication et mention
de la délivrance du brevet:
**05.03.2003 Bulletin 2003/10**

(21) Numéro de dépôt: **00931344.6**

(22) Date de dépôt: **24.05.2000**

(51) Int Cl.$^7$: **G06T 9/00**

(86) Numéro de dépôt international:
**PCT/FR00/01414**

(87) Numéro de publication internationale:
**WO 00/073997 (07.12.2000 Gazette 2000/49)**

(54) **PROCEDE DE CODAGE/DECODAGE D'IMAGES**

VERFAHREN ZUR KODIERUNG/DEKODIERUNG VON BILDERN

IMAGE CODING/DECODING METHOD

(84) Etats contractants désignés:
**DE ES FR GB IT SE**

(30) Priorité: **26.05.1999 FR 9906813**

(43) Date de publication de la demande:
**27.02.2002 Bulletin 2002/09**

(73) Titulaires:
- **FRANCE TELECOM**
  **75015 Paris (FR)**
- **TELEDIFFUSION DE FRANCE**
  **75732 Paris Cédex 15 (FR)**

(72) Inventeurs:
- **LECHAT, Patrick**
  **F-35000 Rennes (FR)**
- **LAURENT-CHATENET, Nathalie**
  **F-35700 Rennes (FR)**

(74) Mandataire: **Vidon, Patrice et al**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(56) Documents cités:
**EP-A- 0 808 066**        **WO-A-98/27515**

- **YAZDI M ET AL: "INTERFRAME CODING USING DEFORMABLE TRAINGLES OF VARIABLE SIZE" PROCEEDINGS OF THE INTERNATIONAL CONFERENCE ON IMAGE PROCESSING,US,LOS ALAMITOS, CA: IEEE, page 456-459 XP000792810 ISBN: 0-8186-8184-5**
- **SALEMBIER P ET AL: "VERY LOW BIT RATE VIDEO CODING USING ACTIVE TRIANGULAR MESH" IEEE INTERNATIONAL CONFERENCE ON ACOUSTICS, SPEECH, AND SIGNAL PROCESSING - PROCEEDINGS. (ICASSP),US,NEW YORK, IEEE, vol. CONF. 21, page 2060-2063 XP000681654 ISBN: 0-7803-3193-1**
- **LECHAT P ET AL: "SCALABLE IMAGE CODING WITH FINE GRANULARITY BASED ON HIERARCHICAL MESH" PROCEEDINGS OF THE SPIE, XP000862993**

**Description**

Le domaine de l'invention est celui du codage d'images fixes ou animées. Plus précisément, l'invention concerne les techniques de compression d'images, ou de séquences d'images, basées sur la mise en oeuvre de transformations mathématiques réversibles.

De très nombreuses techniques de compression d'images sont connues. pour réduire la quantité de données nécessaires pour représenter une image ou une séquence d'images animées. On cherche ainsi, notamment, à réduire les débits des signaux numériques, en vue de leur transmission et/ou de leur stockage sur un support de données.

L'invention s'applique notamment, mais non exclusivement. à la transmission de signaux d'images à faible débit, ainsi qu'aux transmissions sans garantie de débit, telles que celles réalisées selon le protocole IP (« Internet Protocol »).

Parmi les nombreux procédés de codage d'images connus, on peut notamment distinguer les techniques ISO-JPEG et ISO-MPEG, qui ont donné lieu à une norme. Ces procédés de codage reposent notamment sur la mise en oeuvre de transformées, qui permettent une élimination efficace de la redondance dans une image.

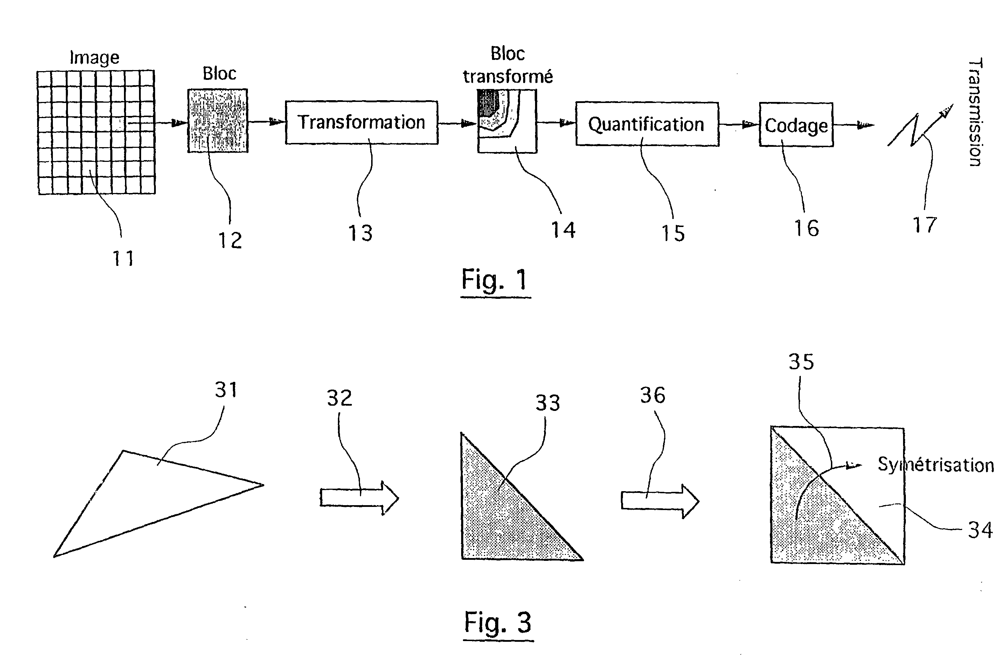

La figure 1 illustre le principe général d'un procédé de codage par transformée.

L'image à coder 11 est tout d'abord partitionnée en un ensemble de blocs 12 rectangulaires non recouvrant de même taille, sur lesquels est appliquée une transformation inversible 13. Cette transformation génère un bloc transformé 14, formé d'un ensemble de coefficients transformés moins corrélés que les coefficients du bloc d'origine 12.

Ces coefficients subissent ensuite une quantification 15, puis un codage 16, avant d'être transmis (17) sur le canal, ou stocké.

Si l'on note I(x,y) la luminance du pixel de coordonnées (x,y) et si l'on considère que l'image à coder 11 a été partitionnée en bloc 12 de taille M x N, l'application d'une transformation 13 a(x, y, m, n) orientée bloc va produire une image F avec :

$$F(m,n) = \sum_{x=0}^{M-1}\sum_{y=0}^{N-1} I(x,y)a(x,y,m,n) \qquad (1)$$

où m ∈[0,M - 1] et n ∈[0,N - 1].

A partir de la transformation a(x, y, m, n), une transformation inverse b(x, y. m, n) peut être définie afin de reconstruire l'image originale I :

$$I(x,y) = \sum_{x=0}^{M-1}\sum_{y=0}^{N-1} F(m,n)b(x,y,m,n) \qquad (2)$$

Les principales transformations utilisées en compression d'images sont :

- la transformation de Karhunen Loève (KLT),
- la transformation de Fourier discrète (DFT),
- la transformation en cosinus discrète (DCT),
- et la transformation de Walsh-Hadamard (WHT).

Il est important de noter que l'opération de transformation 13, appliquée seule, n'assure aucune compression de l'image puisque son seul but est de décorréler les données originales et de concentrer la plus grande partie de l'énergie dans un faible nombre de coefficients transformés. Etant donné que l'énergie totale est conservée, la plupart des coefficients transformés ne contiennent que très peu d'énergie, et c'est donc la quantification 15 et le codage 16 efficaces de ces coefficients qui permettront la compression.

Une transformation de bonne qualité doit permettre une décorrélation efficace, être indépendante des images traitées, et doit posséder des algorithmes rapides permettant une implémentation efficace.

La technique qui s'avère la plus performante pour la décorrélation d'un signal est la KLT. Malheureusement, elle est dépendante des images manipulées (car il est nécessaire de calculer les statistiques du signal pour en déduire la transformée). Il n'existe donc pas d'algorithmes rapides permettant une implémentation efficace, ce qui limite son utilisation.

Cependant, pour les images typiques dans lesquelles il existe une forte corrélation entre les pixels, la performance de la DCT est très proche de celle de la KLT. Par ailleurs, la DCT dispose de nombreux algorithmes rapides permettant une implémentation efficace. De plus, elle ne dépend pas des images manipulées. Enfin, elle introduit moins de déformations inter-blocs que la DFT.

Si l'on considère l'équation (1), la DCT s'obtient en posant :

$$a(x,y,m,n) = \frac{2c(m)c(n)}{\sqrt{MN}}\cos(\frac{(2x + 1)\pi m}{2M})\cos(\frac{(2y + 1)\pi n}{2N}) \tag{3}$$

Avec :

$$c(w) = \begin{cases} \frac{1}{\sqrt{2}} & si \quad w = 0 \\ 1 & sinon \end{cases}$$

Différents standards de compression utilisent une approche reposant sur la DCT, tels que JPEG pour les images fixes. H261 et H263 pour les séquences vidéo en vue d'application de type visiophone et visioconférence utilisant des images au format CIF (Common Intermediate Format) et QCIF (Quarter CIF), et enfin MPEG (1, 2, et 4), pour les séquences vidéo de contenu quelconque, en vue d'applications de type télévision numérique.

Cette technique classique présente cependant plusieurs limitations, dues notamment au fait que le traitement ne tient pas compte du contenu de l'image d'origine. En effet, le partitionnement de l'image repose sur un découpage régulier et systématique en carrés, engendrant ainsi des effets de blocs, et ne prend pas les transitions brusques entre différentes zones de l'image.

Par ailleurs, les techniques mettant en oeuvre des transformations se prêtent mal aux manipulations géométriques (zooms, rotations ou déformations géométriques (« warping »),...), qui sont classiquement utilisées pour déterminer la compensation d'un mouvement entre deux images consécutives dans le cadre d'images animées (MPEG) ou pour réaliser l'intégration d'images naturelles dans des scènes synthétiques.

L'invention a notamment pour objectif de pallier ces inconvénients de l'art antérieur.

Plus précisément, un objectif de l'invention est de fournir un procédé de codage d'images fixes ou animées, basées sur la mise en oeuvre d'une transformation réversible, basée sur une partition différente, à base de triangles. Il convient de noter que la simple formulation de cet objectif relève d'une démarche inventive. En effet, de nos jours, les principales approches par transformée supposent un partitionnement en blocs carrés, ou une décomposition en régions de forme quelconque, mais n'offrant pas la souplesse d'utilisation d'une partition par maillage.

Un objectif particulier de l'invention est de fournir un tel procédé, dans lequel la partition triangulaire est adaptée au contenu sémantique de l'image ou de la séquence d'images.

Un autre objectif de l'invention est, bien sûr, de fournir un tel procédé de codage qui offre un bon rapport coût/ qualité de codage (c'est-à-dire de reconstruction de l'image/quantité de données à transmettre ou à stocker).

L'invention a également pour objectif de fournir un tel procédé de codage qui soit relativement aisé à mettre en oeuvre, et notamment qui ne nécessite pas un nombre important d'opérations supplémentaires complexes par rapport aux techniques connues.

Un objectif complémentaire de l'invention est. dans un mode de réalisation particulier, de fournir un tel procédé de codage qui puisse être mis en oeuvre sélectivement sur des portions d'images, en complément d'une autre approche.

Un autre objectif de l'invention est de fournir un procédé de décodage correspondant, qui permette la reconstruction d'images de façon simple et peu coûteuse (en temps de traitement, capacité de stockage,...).

Ces objectifs ainsi que d'autres qui apparaîtront plus clairement par la suite sont atteints selon l'invention à l'aide d'un procédé de codage d'image, comprenant, pour un domaine correspondant à au moins une portion d'image, les étapes suivantes :

- définition d'une partition triangulaire minimale, recouvrant ledit domaine ;
- association a chacun desdits triangles source d'une matrice carrée représentative dudit triangle source, à l'aide d'une première transformation réversible ;
- application d'une seconde transformation réversible de décorrélation sur chacune desdites matrices carrées, délivrant des matrices transformées.

Ainsi, selon l'invention, il est possible d'appliquer une technique de transformation réversible sur des images qui ne sont pas décomposées en carrés, mais en triangles, ces derniers pouvant être de formes quelconques (en taille et en orientation), et différents les uns des autres. Ils peuvent notamment être adaptés au contenu de l'image.

Il est ainsi possible de cumuler les avantages des techniques à base de transformations et des techniques mettant en oeuvre une décomposition en triangles, sans que les traitements supplémentaires soient très importants, par rapport aux transformations effectuées sur des blocs carrés.

De façon avantageuse, ladite étape d'association d'une matrice carrée comprend les étapes suivantes :

- transformation affine d'un triangle source en un triangle rectangle isocèle, appelé triangle de référence ;
- création d'une matrice carrée dont la partie inférieure comprend les données représentatives dudit triangle rectangle isocèle ;
- symétrisation de ladite matrice carrée.

Ces opérations, et les opérations inverses, sont en effet très simples à mettre en oeuvre.

Selon un mode de réalisation préférentiel de l'invention, ladite matrice carrée est obtenue à l'aide d'une interpolation bilinéaire.

Avantageusement, ladite étape de création d'une matrice carrée met en oeuvre un facteur d'échelle $\alpha$ permettant une expansion ou une compression dans le domaine spatial. On peut ainsi facilement adapter le nombre de données nécessaires pour coder l'image en fonction des besoins et/ou des ressources disponibles.

Dans ce cas, ladite matrice carrée peut comprendre $E(\alpha \times \sqrt{2 \times A})$ lignes, où E représente la fonction délivrant la partie entière supérieure, A étant l'aire dudit triangle rectangle isocèle.

Ladite seconde transformation peut notamment appartenir au groupe des transformations usuelles du domaine, telles que par exemple :

- la transformation de Karhunen Loève (KLT) ;
- la transformation de Fourier discrète (DFT) ;
- la transformation en cosinus discrète (DCT) ;
- la transformation de Walsh-Hadamard (WHT).

Comme on le verra par la suite, la DCT semble actuellement la mieux adaptée.

Préférentiellement, le procédé de codage d'image selon l'invention comprend ensuite une étape de quantification et de codage des données de la partie inférieure de ladite matrice transformée. La plupart des techniques de quantification et de codage peuvent être utilisées.

En particulier, ladite quantification peut avantageusement appartenir au groupe comprenant :

- une quantification uniforme ;
- une quantification à parcours zigzag, le pas de quantification étant incrémenté au fur et à mesure dudit parcours ;
- une quantification basée sur au moins une matrice de pondération pré-évaluée ou optimisée pour l'image traitée.

Par ailleurs, le codage comprend préférentiellement une étape de codage RLE ("Run Length Encoding" : codage par longueur de séquences) et entropique des données quantifiées.

De façon avantageuse, le procédé de l'invention est paramétrable. Notamment, on peut prévoir que ledit facteur d'échelle $\alpha$, le type de quantification et/ou le pas de quantification sont modifiables, pour chacun desdits triangles et/ou pour chacune desdites portions d'image.

Le procédé décrit s'applique quelle que soit la méthode utilisée pour déterminer les triangles à traiter. Selon un mode de réalisation avantageux, ladite partition triangulaire est obtenue selon une méthode tenant compte du contenu de l'image ou de la portion d'image.

En d'autres termes, les sommets et les arêtes des triangles coïncident, autant que faire se peut, avec des transitions dans l'image considérée.

Notamment, ladite méthode appartient avantageusement au groupe comprenant :

- les méthodes mettant en oeuvre une DCT ;
- les méthodes à base de décomposition fractale ;
- les méthodes dites "matching pursuit" (ou méthodes de poursuites d'appariement) ;
- les méthodes mettant en oeuvre une SADCT ("Shape Adaptive DCT").

Le procédé décrit ci-dessus peut bien sûr s'appliquer à une image (ou une séquence d'images) complète. Il peut également, selon un mode de réalisation avantageux, être mis en oeuvre sur des portions d'image présentant une texture dont l'erreur de représentation est supérieure à un seuil donné. Ladite erreur de représentation peut notamment correspondre à un écart de luminance entre ledit triangle source et le triangle après reconstruction.

Dans ce cas, le procédé de codage est préférentiellement mis en oeuvre sur une image d'erreur, correspondant à la différence entre une image source et une image approximée, obtenue en mettant en oeuvre un procédé préalable distinct de codage.

Ledit procédé préalable de codage peut notamment être un procédé d'approximation par affinement, mettant en oeuvre un maillage hiérarchique à partir duquel on construit un arbre quaternaire présentant autant de niveaux qu'il y a de niveaux dans ledit maillage hiérarchique, chacun desdits niveaux présentant un nombre de noeuds égal au nombre de triangles dans le niveau de maillage correspondant. Dans ce cas, pour les noeuds répondant à un critère prédéterminé, on remplace avantageusement ledit codage préalable par un codage à base de transformée tel que décrit ci-dessus.

Ledit critère prédéterminé peut reposer, selon un mode de réalisation préférentiel, sur l'écart de luminance entre le triangle de l'image approximée et celui de l'image source.

Dans ce cas, le traitement pour chaque noeud (sachant qu'un noeud correspond à un triangle sur un niveau donné de l'arbre) est avantageusement le suivant :

- on calcule un écart de luminance entre l'image à coder et l'image interpolée sur ledit triangle, à partir des sommets du maillage emboîté auquel appartient le noeud considéré ;
- on compare ledit écart de luminance à un écart seuil ;
- on effectue le choix suivant :

    - si ledit écart de luminance est inférieur audit écart seuil, on interrompt le procédé d'approximation par raffinement du maillage hiérarchique, pour le noeud considéré ;
    - si ledit écart de luminance est supérieur audit écart seuil, mais inférieur à un second seuil, on continue à appliquer ledit procédé mettant en oeuvre un maillage hiérarchique ;
    - si ledit écart de luminance est supérieur audit second seuil, on met en oeuvre le procédé de codage décrit précédemment.

Selon un mode de réalisation particulier de l'invention, ledit second seuil vaut $k \times S$, avec :

k : réel supérieur ou égal à 1 ;
S : valeur réelle proportionnelle à l'écart de luminance d'erreur moyen.

Préférentiellement, ledit écart de luminance représente une erreur quadratique ou une erreur absolue entre ledit triangle source et le triangle approximé correspondant.

L'invention concerne également les décodeurs et le décodage des images codées selon le procédé de codage décrit ci-dessus. Le procédé de décodage de données représentatives d'une image codée selon le procédé de codage de l'invention comprend notamment les étapes suivantes de reconstruction d'une approximation de l'image d'origine :

a) application d'une transformation inverse à ladite seconde transformation réversible sur lesdites matrices transformées, délivrant lesdites matrices carrées reconstruites ;
b) association à chacune desdites matrices carrées reconstruites d'un triangle reconstruit correspondant, à l'aide d'une transformation affine inverse de ladite première transformation réversible ;
c) reconstruction de ladite partition minimale, à partir desdits triangles reconstruits.

En d'autres termes, la reconstruction des images codées repose, en particulier, sur la mise en oeuvre des transformations inverses à celles utilisées lors du codage.

Notamment, lesdites matrices carrées peuvent être recréées à partir des données d'un train binaire reçu, dont les données décodées sont les coefficients du triangle à reconstruire, qui forment la partie inférieure de ladite matrice.

Lorsqu'un codage préalable, tel que décrit précédemment, a été mis en oeuvre, les étapes a), b) et c) sont bien sûr appliquée sur la partie correspondante du train binaire reçu, l'autre partie du train binaire ayant été codée et étant décodée selon une autre méthode.

Notamment, lorsque le train binaire comprend d'une part des données codées selon un codage préalable, et d'autre part des données codées à l'aide desdites transformations réversibles, ledit procédé de décodage comprend :

- un décodage préalable desdites données codées selon un codage préalable, permettant la description d'une représentation initiale ;
- un décodage complémentaire desdites données codées à l'aide desdites transformations réversibles, mettant en oeuvre lesdites étapes a), b) et c), et permettant d'affiner ladite représentation initiale.

Préférentiellement, ledit codage préalable mettant en oeuvre un codage hiérarchique, ledit décodage préalable assure la lecture, dans le train binaire reçu, d'au moins une des informations appartenant au groupe comprenant :

- le nombre de niveaux de la hiérarchie ;
- l'identification de la technique de codage utilisée pour chacun des triangles ;
- la succession des valeurs différentielles des composantes associées aux noeuds dudit maillage hiérarchique ;
- l'identification des arcs sur lesquels une inversion de diagonale est réalisée.

D'autres caractéristiques et avantages de l'invention apparaîtront plus clairement à la lecture de la description suivante d'un mode de réalisation préférentiel donné à titre de simple exemple illustratif et non limitatif, et des dessins annexés parmi lesquels :

- la figure 1, déjà commentée en préambule, illustre la technique connue d'un codage mettant en oeuvre une transformation ;
- la figure 2 est un organigramme simplifié du procédé de l'invention;
- la figure 3 illustre le principe des deuxième et troisième étapes du procédé de la figure 2 ;
- la figure 4 est un extrait, plus précis, de la figure 3, correspondant à la deuxième étape du procédé de la figure 1 ;
- les figures 5 et 6 présentent deux modes de quantification pouvant être utilisés dans le procédé de la figure 2 ;
- la figure 7 illustre le parcours en zig-zag de l'étape de codage du procédé de la figure 2 ;
- la figure 8 illustre la correspondance entre le maillage emboîté et l'arbre quaternaire dans un procédé de codage hiérarchique ;
- la figure 9 est un exemple de sélection des noeuds de l'arbre de la figure 8, sur lesquels le procédé de la figure 2 va être mis en oeuvre ;
- la figure 10 est un organigramme simplifié illustrant le choix du traitement à effectuer, lorsque l'on met en oeuvre de façon associée le procédé de l'invention et un codage hiérarchique.

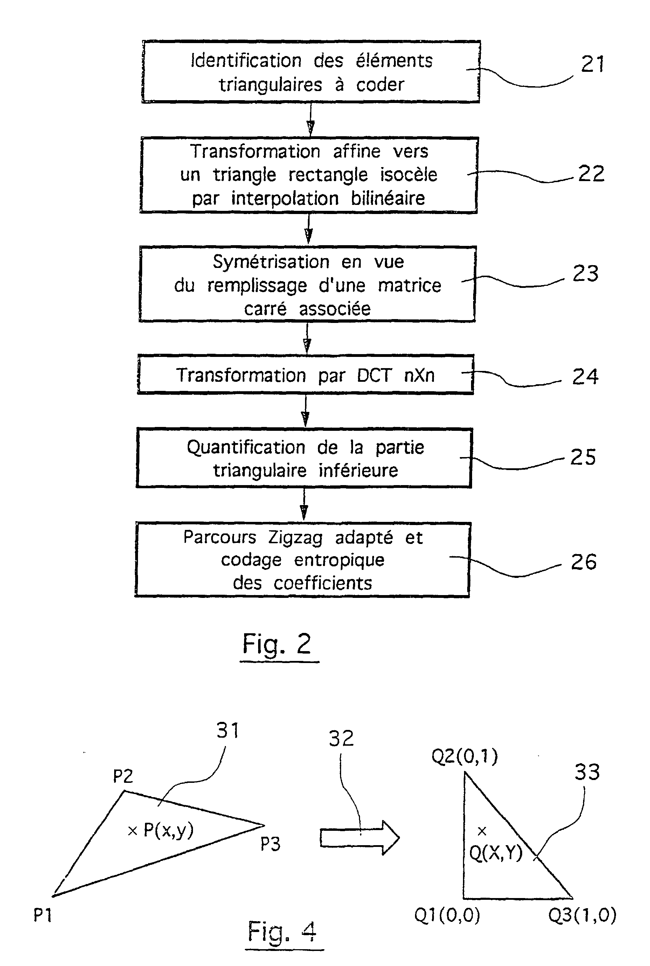

L'invention propose donc la mise en oeuvre d'une transformation, par exemple une transformation DCT, adaptée à une partition triangulaire. La figure 2 est un organigramme général illustrant le procédé correspondant.
Le traitement avec noeud selon l'invention est donc le suivant :

- définition 21, sur le domaine de l'image à coder, d'une partition triangulaire, qui peut être adaptée au contenu, sur le domaine de l'image (ou de la, ou des, portion(s) d'image) à coder ;
- détermination, pour chaque élément de la partition obtenue, des transformations permettant d'associer à chaque élément triangulaire un triangle de référence 22, puis un carré (c'est-à-dire une matrice) 23 ;
- réalisation d'une DCT 24 sur chacune de ces matrices ;
- application d'un procédé de quantification 25 et de codage 26, pouvant être identique à ceux des standards actuels.

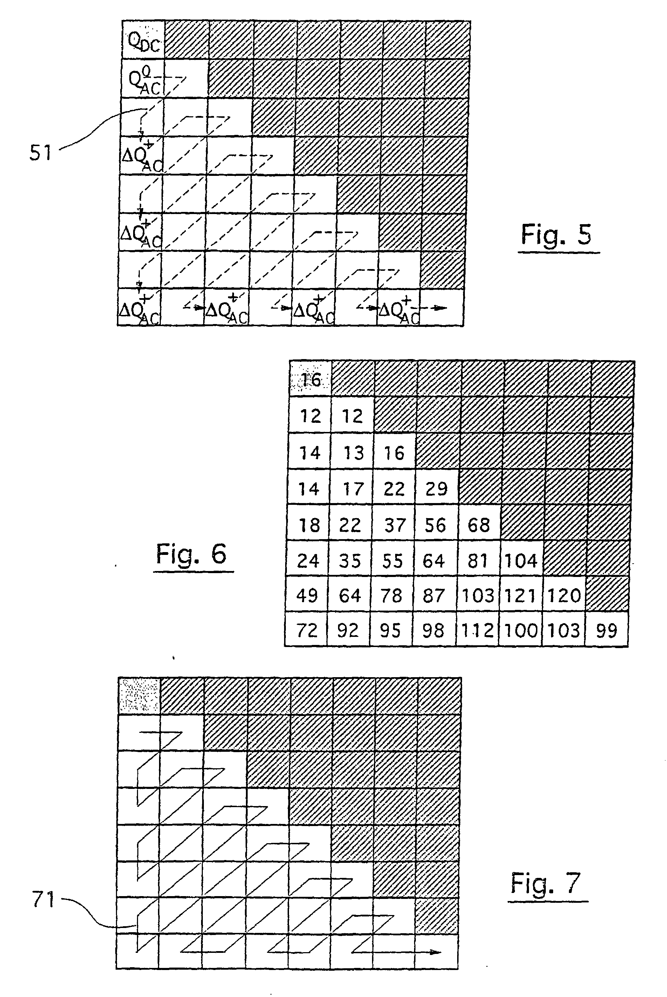

Selon la première étape 21 du procédé de l'invention, on définit tout d'abord, sur le domaine de l'image, une partition triangulaire. Cette partition triangulaire est généralement initialement régulière (bien qu'elle puisse également être irrégulière). Elle peut donc parfois sembler inadaptée, lorsqu'elle est régulière, pour représenter une image comportant des disparité au niveau de son contenu et/ou mêlant des régions uniformes à des zones plus texturées, nécessitant une forte densité de sommets.
Cette étape 21 comprend donc avantageusement une optimisation de la position des sommets du maillage définissant les triangles, de façon à déplacer les concentrations de sommets du maillage vers les zones le nécessitant. Une telle technique est par exemple présentée dans le document de brevet FR-98 12 525, au nom des titulaires de la présente demande de brevet.
L'effet visuel le plus immédiat d'une telle optimisation se manifeste par un rapprochement des sommets du maillage vers les contours physiques de l'objet de l'image.
Les deuxième et troisième étapes 22 et 23 du procédé de l'invention sont illustrées par la figure 3.
On détermine, pour chaque élément triangulaire 31 de la partition, la transformation affine 32 permettant d'associer à chaque triangle quelconque 31 un triangle de référence 33, qui soit isocèle. On transforme ensuite le triangle de référence en un carré, et plus précisément une matrice carrée 34, par symétrisation 35.
Plus précisément, la première transformation 32 consiste à déterminer la transformation affine permettant de passer d'un triangle quelconque 31 au triangle de référence 33, ainsi que cela est illustré par la figure 4.
La transformation affine inversible F telle que $P_1 = F(Q_i)$, avec $P_1 = (x_1, y_1)$ et $Q_i = (X_1, Y_i)$, s'écrit :

$$\begin{cases} x = x_1 + (x_3 - x_1)X + (x_2 - x_1)Y \\ y = y_1 + (y_3 - y_1)X + (y_2 - y_1)Y \end{cases}$$

Cette transformation affine est inversible, car le déterminant de la matrice est égal (au signe près) à 2A (où A représente l'aire du triangle quelconque 31), qui est supposé non nul. Cette transformation affine inverse s'écrit donc :

$$\begin{cases} X = \dfrac{(x_2 - x_1)(y_1 - y) + (y_1 - y_2)(x_1 - y)}{(x_3 - x_1)(y_2 - y_1) + (x_2 - x_1)(y_1 - y_3)} \\ Y = \dfrac{(y_3 - y_1)(x_1 - x) + (x_1 - x_3)(y_1 - y)}{(x_3 - x_1)(y_2 - y_1) + (x_2 - x_1)(y_1 - y_3)} \end{cases}$$

La deuxième transformation 23, 36 consiste à transposer les informations contenues dans chaque triangle d'aire A dans la partie inférieure d'une matrice carrée G de $E(\alpha \times \sqrt{2 \times A})$ lignes, où $E$ représente la partie entière supérieure de la valeur entre parenthèses, et $\alpha \in R^{+,*}$ représente un facteur d'échelle, qui agit sur la représentation visuelle de l'image, en réalisant une expansion ($\alpha > 1$) ou une compression ($\alpha < 1$) dans le domaine spatial.
D'après les formules (1) et (2), on a :

$$F(m,n) = F(n,m)$$

car I(x,y) = I(x,y), du fait de la symétrisation 35.
Après symétrisation de G, sa transformation 24 selon l'équation (1) engendre une matrice également symétrique H.
De ce fait, les informations contenues dans la partie inférieure de chaque matrice G étant identiques à la partie supérieure (25), l'utilisation de la transformation DCT 24 basée bloc peut être mise en oeuvre comme par exemple dans MPEG ou JPEG.
Après transformation 24, seules les parties inférieures des matrices H seront quantifiées (25) et codées (26).
Afin d'optimiser les performances du coût de codage 26, deux moyens d'action peuvent être mis en oeuvre, modulés par exemple en fonction de la pertinence de la texture sous-jacente aux triangles considérés, à savoir :

- le facteur d'échelle $\alpha$ (on prendra alors $\alpha < 1$) ;
- le choix de la quantification, et en particulier amplitude des pas de quantification retenus

Parmi les quantifications 25 possibles, on peut notamment utiliser :

- une quantification uniforme ;
- une quantification à parcours zig-zag ;
- une quantification par utilisation d'une matrice de pondération pré-évaluée sur critère psycho-visuel.

La quantification à parcours zig-zag consiste à initialiser le processus de quantification à une valeur $Q^0_{AC}$, qui au cours du parcours, à chaque remontée, est incrémentée d'une valeur $\Delta_{AC}$, ainsi que cela est illustré par la flèche 51 de la figure 5.
Un exemple de matrice de pondération pré-évaluée sur critère psycho-visuel est la matrice QM standard JPEG. illustré en figure 6. On peut également considérer la matrice de la norme MPEG4. Les matrices G et QM pouvant être de taille différente, on procédera à une interpolation de la matrice QM, ramenant cette dernière à la taille de G comme pour JPEG, il est alors possible de définir un facteur de qualité qf agissant comme multiplicateur à la matrice QM. On peut également mettre en oeuvre une matrice de pondération optimisée pour l'image traitée
Le codage effectif 26 est par exemple réalisé en effectuant un codage de type RLE (Run Length Encoding) et entropique, sur le parcours zig-zag 71 représenté en figure 7.
Il apparaît clairement que le procédé décrit ci-dessus peut être utilisé seul, sur des images complètes.
Il peut également, avantageusement être mise en oeuvre sur des portions d'images, en complément d'une autre approche de codage. En particulier, il peut avantageusement être utilisé de façon sélective sur des régions particulières de l'image, et notamment les parties très texturées.

Ainsi, par exemple, le procédé de l'invention s'avère particulièrement bien adapté à la technique de codage décrite dans la demande de brevet FR-98 12 525, au nom des mêmes titulaires que la présente demande de brevet, et ayant pour titre "procédé de codage d'images fixes ou animées avec réduction et adaptation du débit". Il apparaît en effet que cette dernière technique a des difficultés à représenter les textures.

Avant de montrer comment le procédé de l'invention peut être ainsi utilisé, on rappelle brièvement le principe du procédé décrit dans la demande de brevet FR-98 12 525.

Cette technique a pour objet un procédé de codage d'une image numérique, visant à produire un train binaire représentatif de cette image, la longueur du train binaire étant fonction de la représentation voulue. Ce procédé reprend les étapes suivantes :

- définir, sur un domaine de l'image à coder, un maillage hiérarchique comportant une pluralité de maillages emboîtés dont les sommets de mailles peuvent être des pixels de ladite image ;
- réaliser les optimisations de luminance, chrominance, et positions sur chaque niveau de maillage ;
- déterminer, pour chaque maille dudit maillage hiérarchique, un écart de luminance entre l'image à coder et une image interpolée obtenue à partir des sommets du maillage emboîté auquel appartient la maille considérée, et
- introduire dans le train binaire les valeurs (avantageusement codées en différentiel par rapport au niveau hiérarchique précédent) de positions, de luminance et de chrominance des sommets des mailles dont l'écart de luminance est supérieur à un écart seuil.

On notera que cette technique n'est pas limitée aux signaux de luminance et de chrominance, mais peut s'appliquer à tout modèle de couleurs.

Le procédé de la présente invention peut avantageusement intervenir lors du calcul de cet écart seuil.

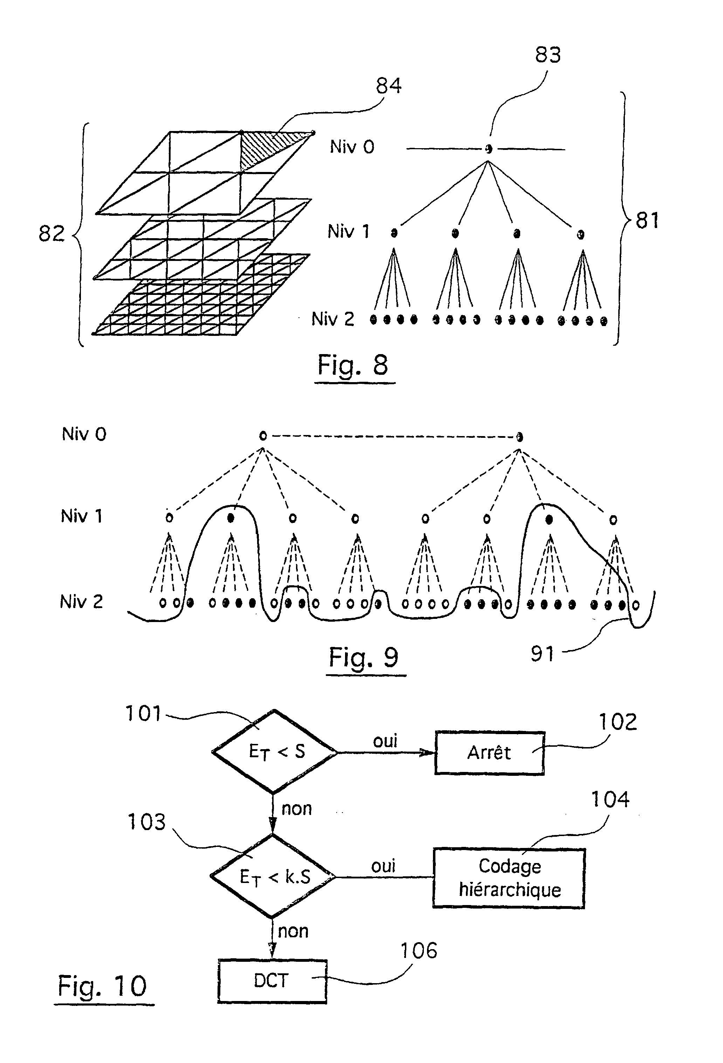

En effet, selon la technique antérieure, et ainsi que cela est illustré par la figure 8, au terme de l'étape de maillage, on construit une structure en arbre quaternaire 81, associé au maillage hiérarchique 82, pour manipuler les valeurs (couleurs et positions) des sommets des mailles. L'arbre 81 présente un nombre de noeuds égal au nombre de triangles dans le niveau de maillage correspondant. Chaque noeud 83 de l'arbre se rapporte à un unique triangle 84 du maillage hiérarchique 82.

Une fois l'arbre 81 construit, il faut déterminer les données de l'arbre à introduire dans le train binaire représentatif de l'image. Cette détermination dépend de la qualité voulue.

Pour réaliser cette détermination, on prévoit de calculer, pour chaque triangle, un écart de luminance entre l'image à coder et l'image interpolée à partir des sommets du maillage emboîté auquel appartient la maille considérée. Cet écart est ensuite comparé à un écart seuil pour chaque triangle. La valeur de l'écart seuil est fonction de la qualité de représentation voulue.

On introduit ensuite dans le train binaire la partie de l'arbre se rapportant aux triangles dont l'écart de luminance est supérieur. Cette sélection des noeuds de l'arbre par parcours en profondeur est illustrée par la figure 9. Seuls sont conservés les noeuds se trouvant au-dessus de la frontière 91.

L'écart seuil permet donc de transmettre les données relatives à l'image fonction de la qualité locale de ces différentes partitions triangulaires. En effet, sur une partie texturée, la transmission des données intervient jusqu'au dernier niveau de maillage (maillage le plus fin) et, pour les parties plus lisses, un niveau grossier s'avère suffisant.

Selon la présente invention, on peut avantageusement mixer les deux approches, à savoir la transmission affine, symétrisée et transformée par DCT (nommée par soucis de concision DCT par la suite), avec la technique des maillages emboîtés qui vient d'être décrite.

En effet, selon cette technique des maillages emboîtés, on définit tout d'abord, sur le domaine de l'image à coder, un maillage hiérarchique comportant une pluralité de maillages emboîtés. Les sommets de ces maillages sont des pixels de l'image à coder. Ce maillage est par exemple obtenu par divisions régulières et successives des mailles du maillage grossier.

Selon la présente invention, on se place à un niveau n (compris entre le premier et le dernier niveau de maillage) de maillage, on calcule l'image interpolée par la technique du maillage hiérarchique, et on en déduit une image d'erreur correspondant à la différence de luminance entre l'image originale et l'image interpolée.

On construit ensuite l'arbre relatif aux n premiers niveaux de maillages, et on calcule l'écart de luminance pour chacun des triangles du maillage de l'image d'erreur, et on choisit un écart seuil S. Le critère de l'écart de luminance sur un triangle T correspond à l'erreur quadratique suivante :

$$E_T = \sum_{x,y \in T} (I^{interp}(x,y) - I^{orig}(x,y))^2 = \sum_{x,y \in T} I^2(x,y)$$

Avec I, l'image d'erreur entre l'image interpolée et l'image originale sur le triangle T.

Selon la présente invention, on détermine alors les noeuds de l'arbre permettant de spécifier si la procédure d'approximation doit s'arrêter, si l'on doit continuer la subdivision du maillage par interpolation affine avec la technique du maillage hiérarchique, ou si l'on doit utiliser la DCT selon la technique décrite précédemment. Pour cela, on peut utiliser le procédé illustré en figure 10. Si, pour le niveau n donné, l'écart de luminance d'un triangle T du maillage est :

- 101 : inférieur à l'écart seuil : la partie de l'image interpolée sur ce triangle est d'une qualité visuelle correcte, et la procédure s'arrête (102) ;
- 103 : supérieur à l'écart seuil mais inférieur à k x S, avec k ≥ 1 : le procédé d'approximation continu avec la technique du maillage hiérarchique (104), la partie de l'image interpolée correspondant à une image moyennement texturée ;
- 105 : supérieur à k x S avec k ≥ 1 : le triangle est traité par une DCT appliquée au triangle de l'image d'erreur (106).

Cette sélection se justifie de la manière suivante. On sait que :

$$|F(m.n)| \leq \sum_{x=0}^{M-1}\sum_{y=0}^{N-1}|I(x,y)a(x,y,m,n)| \qquad d'après \quad (1)$$

d'où :

$$|F(m.n)| \leq 2 \times \sum_{x=0}^{M-1}\sum_{y=0}^{N-1}|I(x,y)|$$

donc :

$$\exists l \geq \frac{1}{Min_{x,y}|I(x,y)|}, \qquad |F(m,n)| \leq 2 \times l \times \sum_{x=0}^{M-1}\sum_{y=0}^{N-1}I^2(x,y)$$

On constate donc que le coefficient F(m, n) tend vers zéro lorsque l'écart de luminance tend vers zéro. Une faible erreur quadratique entraîne des coefficients AC après transformée de faible amplitude, ayant de fortes chances d'être annulés après quantification.

Ainsi, réaliser sur de telles mailles une interpolation affine moins coûteuse qu'une transformation DCT s'avère plus judicieux.

Le procédé global consiste donc à traiter une partie de l'image par la technique du maillage hiérarchique, et à traiter les parties très texturées de cette image par une DCT selon la présente invention, appliquée sur des triangles de l'image d'erreur correspondante.

On applique donc ici sur la partie texturée de l'image d'erreur une DCT sur les triangles dont l'écart de luminance est important.

De plus, la technique du maillage hiérarchique n'est qu'un exemple. La technique de l'invention mettant en oeuvre une DCT sur des triangles peut être utilisée par toute autre technique mettant en oeuvre des triangles, tels que par exemple :

- les méthodes à base de décomposition fractale : le principe de compression d'images en niveaux de gris par la méthode des IFS, aussi appelée compression fractale, repose sur l'expression du contenu de l'image au moyen du contenu lui-même.
  Il peut être vu comme une auto-quantification de l'image. La formalisation de cette méthode provient notamment des travaux de Hutchinson en 1981, et de ceux de Bradley, Demko et d'autres chercheurs du Georgia Institute of Technology entre 1985 et 1988. Le premier algorithme automatique appliquant ces idées à la compression des images a été proposé par Jacquin en 1989.
  Des améliorations à cette technique sont proposées dans le document de brevet FR- 99 00656, intitulé "procédé et dispositif de codage a base de schémas IFS, à fonctions de collage oscillantes, procédé de codage, fonction de collage, support de données et applications correspondants".

- les methodes dites de "matching pursuit" (encore appelées poursuites d'appariemments), notamment décrit dans l'article de Ralph Neff et Avideh Zakhor, intitulé "Very Low Bit Rate Video Coding based on Matching Pursuits", publié dans IEEE Transactions on circuits and systems for video technology.

  Le codage (du résidu) par matching pursuit est une méthode itérative qui utilise un dictionnaire de fonctions redondantes. A chaque itération, on cherche la fonction qui représente le mieux le résidu obtenu à l'étape précédente. On décompose ainsi l'image sur une suite d'atomes qui la représentent de manière optimale ;

- la SADCT ("Shape Adaptive DCT"), décrite par exemple par T. Sikora et B. Makai dans "Shape Adaptive DCT for generic Coding" (IEEE Transactions on Circuits and Systems for Video Technology, 5(1), pp. 59 - 62, février 1995).

L'invention concerne également le décodage des données codées selon le procédé de codage décrit précédemment. Ce procédé de décodage se déduit directement des étapes de codage.

Ainsi, lorsqu'un codage préalable, notamment de type hiérarchique a été mis en oeuvre, le décodage repose sur la réception d'un train binaire contenant :

- la description d'une représentation initiale de l'image, issue du codage préalable (qui sera soumise à un décodage préalable symétrique) ;
- les valeurs quantifiées et codées après transformation DCT associées aux triangles sélectionnés.

Les coefficients de pondération des matrices peuvent être transmis dans le train binaire. Cependant, préférentiellement, ils sont connus du décodeur.

Le décodage des valeurs quantifiées et codées après transformation DCT comprend notamment les étapes suivantes :

- création d'une matrice carrée symétrique dont la partie inférieure comprend les coefficients décodés du triangle à représenter, lu dans le train binaire ;
- transformation DCT inverse de la matrice ainsi créée ;
- transformation affine du triangle rectangle isocèle associé à la partie inférieure de la matrice, vers le triangle à représenter.

Lorsque le codage préalable repose sur un maillage hiérarchique, le décodage correspondant assure notamment la lecture, dans le train binaire reçu :

- du nombre de niveaux de la hiérarchie ;
- de l'identification de la technique de codage utilisée pour chacun des triangles ;
- de la succession des valeurs différentielles des composantes associées aux noeuds dudit maillage hiérarchique.

**Revendications**

1. Procédé de codage d'image, **caractérisé en ce qu'**il comprend, pour un domaine correspondant à au moins une portion d'image, les étapes suivantes :

   - définition (21) d'une partition triangulaire minimale, recouvrant ledit domaine ;
   - association à chacun desdits triangles source d'une matrice carrée (34) représentative dudit triangle source (31), à l'aide d'une première transformation réversible (22, 23) ;
   - application (24) d'une seconde transformation réversible de décorrélation sur chacune desdites matrices carrées, délivrant des matrices transformées.

2. Procédé de codage d'image selon la revendication 1, **caractérisé en ce que** ladite étape d'association d'une matrice carrée comprend les étapes suivantes :

   - transformation affine (32) d'un triangle source (31) en un triangle rectangle isocèle (33), appelé triangle de référence ;
   - création (36) d'une matrice carrée (34) dont la partie inférieure comprend les données représentatives dudit triangle rectangle isocèle (33) ;
   - symétrisation (35) de ladite matrice carrée.

**3.** Procédé de codage d'image selon la revendication 2, **caractérisé en ce que** ladite étape de création (36) d'une matrice carrée met en oeuvre un facteur d'échelle $\alpha$ permettant une expansion ou une compression dans le domaine spatial.

**4.** Procédé de codage d'image selon la revendication 3, **caractérisé en ce que** ladite matrice carrée comprend $E(\alpha \times \sqrt{2 \times A})$ lignes, où E représente la partie entière supérieure, A étant l'aire dudit triangle rectangle isocèle.

**5.** Procédé de codage d'image selon l'une quelconque des revendications 1 à 4, **caractérisé en ce que** ladite seconde transformation appartient au groupe comprenant :

- la transformation de Karhunen Loève (KLT) ;
- la transformation de Fourier discrète (DFT) ;
- la transformation en cosinus discrète (DCT) ;
- la transformation de Walsh-Hadamard (WHT).

**6.** Procédé de codage d'image selon l'une quelconque des revendications 1 à 5, **caractérisé en ce qu'**il comprend une étape de quantification (25) et de codage (26) des données de la partie inférieure de ladite matrice transformée.

**7.** Procédé de codage d'image selon la revendication 6, **caractérisé en ce que** ladite quantification (25) appartient au groupe comprenant :

- une quantification uniforme ;
- une quantification à parcours zigzag, le pas de quantification étant incrémenté au fur et à mesure dudit parcours ;
- une quantification basée sur au moins une matrice de pondération pré-évaluée ou optimisée pour l'image traitée.

**8.** Procédé de codage d'image selon l'une quelconque des revendications 4 à 7, **caractérisé en ce que** ledit facteur d'échelle $\alpha$, le type de quantification et/ou le pas de quantification sont modifiables, pour chacun desdits triangles et/ou pour chacune desdites portions d'image.

**9.** Procédé de codage d'image selon l'une quelconque des revendications 6 à 8, **caractérisé en ce qu'**il comprend une étape de codage RLE et entropique (26) des données quantifiées.

**10.** Procédé de codage d'image selon l'une quelconque des revendications 1 à 9, **caractérisé en ce que** ladite partition triangulaire est obtenue selon une méthode tenant compte du contenu de l'image ou de la portion d'image.

**11.** Procédé de codage d'image selon la revendication 10, **caractérisé en ce que** ladite méthode appartient au groupe comprenant :

- les méthodes à base de décomposition fractale ;
- les méthodes dites "matching pursuit" ;
- les méthodes mettant en oeuvre une SADCT ;
- les méthodes mettant en oeuvre une DCT.

**12.** Procédé de codage d'image selon l'une quelconque des revendications 1 à 11, **caractérisé en ce qu'**il est mis en oeuvre (106) sur des portions d'image présentant une texture dont l'erreur de représentation est supérieure à un seuil donné (103).

**13.** Procédé de codage d'image selon l'une quelconque des revendications 1 à 12, **caractérisé en ce que** ladite erreur de représentation correspond à un écart de luminance entre ledit triangle source et le triangle après reconstruction.

**14.** Procédé de codage d'image selon l'une quelconque des revendications 1 à 13, **caractérisé en ce qu'**il est mis en oeuvre sur une image d'erreur, correspondant à la différence entre une image source et une image approximée, obtenue en mettant en oeuvre un procédé préalable distinct de codage.

**15.** Procédé de codage d'image selon la revendication 14, **caractérisé en ce que** ledit procédé préalable de codage est un procédé d'approximation par affinement, mettant en oeuvre un maillage hiérarchique à partir duquel on construit un arbre quaternaire présentant autant de niveaux qu'il y a de niveaux dans ledit maillage hiérarchique, chacun desdits niveaux présentant un nombre de noeuds égal au nombre de triangles dans le niveau de maillage correspondant,

et **en ce que**, pour les noeuds répondant à un critère prédéterminé (103), on remplace ledit codage préalable par un codage selon l'une quelconque des revendications 1 à 11.

16. Procédé de codage d'image selon la revendication 15, **caractérisé en ce que** ledit critère prédéterminé repose sur l'écart de luminance entre le triangle de l'image approximée et celui de l'image source.

17. Procédé de codage d'image selon la revendication 16, **caractérisé en ce que**, pour chaque noeud :

- on calcule un écart de luminance entre l'image à coder et l'image interpolée à partir des sommets du maillage emboîté auquel appartient le noeud considéré ;
- on compare ledit écart de luminance à un écart seuil ;
- on effectue le choix suivant :

  - si ledit écart de luminance est inférieur audit écart seuil, on interrompt le procédé d'approximation par raffinement du maillage hiérarchique, pour le noeud considéré ;
  - si ledit écart de luminance est supérieur audit écart seuil, mais inférieur à un second seuil, on continue (104) à appliquer ledit procédé mettant en oeuvre (106) un maillage hiérarchique ;
  - si ledit écart de luminance est supérieur audit second seuil, on met en oeuvre le procédé de codage selon l'une quelconque des revendications 1 à 11.

18. Procédé de codage d'image selon la revendication 17, **caractérisé en ce que** ledit second seuil vaut $k \times S$, avec :

  $k$ : réel supérieur ou égal à 1 ;
  $S$ : valeur réelle proportionnelle à l'écart de luminance d'erreur moyen.

19. Procédé de codage d'image selon l'une quelconque des revendications 16 à 18, **caractérisé en ce que** ledit écart de luminance représente une erreur quadratique ou une erreur absolue entre ledit triangle source et le triangle approximé correspondant.

20. Procédé de décodage de données représentatives d'une image codée selon un procédé comprenant, pour un domaine correspondant à au moins une portion d'image, les étapes suivantes :

- définition d'une partition triangulaire minimale, recouvrant ledit domaine ;
- association à chacun desdits triangles source d'une matrice carrée représentative dudit triangle source, à l'aide d'une première transformation réversible ;
- application d'une seconde transformation réversible de décorrélation sur chacune desdites matrices carrées, délivrant des matrices transformées,

**caractérisé en ce qu'**il comprend les étapes suivantes de reconstruction d'une approximation de l'image d'origine :

  a) application d'une transformation inverse à ladite seconde transformation réversible de décorrélation sur lesdites matrices transformées, délivrant lesdites matrices carrées reconstruites ;
  b) association à chacune desdites matrices carrées reconstruites d'un triangle reconstruit correspondant, à l'aide d'une transformation affine inverse de ladite première transformation réversible ;
  c) reconstruction de ladite partition minimale, à partir desdits triangles reconstruits.

21. Procédé de décodage selon la revendication 20, **caractérisé en ce que** lesdites matrices carrées sont recréées à partir des données d'un train binaire reçu, dont les données décodées sont les coefficients du triangle à reconstruire, qui forment la partie inférieure de ladite matrice.

22. Procédé de décodage selon l'une quelconque des revendications 20 et 22, **caractérisé en ce qu'**il met en oeuvre les étapes a), b) et c) sur une partie du train binaire reçu seulement, l'autre partie du train binaire ayant été codée et étant décodée selon une autre méthode.

23. Procédé de décodage selon la revendication 22, **caractérisé en ce que** ledit train binaire comprend d'une part

**EP 1 181 668 B1**

des données codées selon un codage préalable, et d'autre part des données codées à l'aide desdites transformations réversibles, ledit procédé de décodage comprenant :

- un décodage préalable desdites données codées selon un codage préalable, permettant la description d'une représentation initiale ;
- un décodage complémentaire desdites données codées à l'aide desdites transformations réversibles, mettant en oeuvre lesdites étapes a), b) et c), permettant d'affiner ladite représentation initiale.

24. Procédé de décodage selon l'une quelconque des revendications 22 et 23, **caractérisé en ce que**, ledit codage préalable mettant en oeuvre en codage hiérarchique, ledit décodage préalable assure la lecture, dans le train binaire reçu, d'au moins une des informations appartenant au groupe comprenant :

- le nombre de niveaux de la hiérarchie ;
- l'identification de la technique de codage utilisée pour chacun des triangles ;
- la succession des valeurs différentielles des composantes associées aux noeuds dudit maillage hiérarchique ;
- l'identification des arcs sur lesquels une inversion de diagonale est réalisée.

**Claims**

1. Method for image coding, **characterised in that** it comprises, for a domain corresponding to at least one image portion, the following steps:

- defining (21) a minimum triangular partition covering the said domain;
- associating with each of the said source triangles a square matrix (34) representing the said source triangle (31), with the aid of a reversible first transformation (22, 23);
- applying (24) a reversible decorrelating second transformation to each of the said square matrices, delivering transformed matrices.

2. Method for image coding according to Claim 1, **characterised in that** the said step of associating a square matrix comprises the following steps:

- affine transformation (32) of a source triangle (31) into a right-angled isosceles triangle (33), referred to as the reference triangle;
- creation (36) of a square matrix (34) whose lower part comprises the data representing the said right-angled isosceles triangle (33);
- symmetrisation (35) of the said square matrix.

3. Method for image coding according to Claim 2, **characterised in that** the step (36) of creating a square matrix implements a scale factor $\alpha$ permitting expansion or compression in the space domain.

4. Method for image coding according to Claim 3, **characterised in that** the said square matrix comprises $E(\alpha \times \sqrt{2 \times A})$ rows, where E represents the upper integer part, A being the area of the said right-angled isosceles triangle.

5. Method for image coding according to any one of Claims 1 to 4, **characterised in that** the said second transformation belongs to the group comprising:

- the Karhunen Loève transform (KLT);
- the discrete Fourier transform (DFT) ;
- the discrete cosine transform (DCT) ;
- the Walsh-Hadamard transform (WHT).

6. Method for image coding according to any one of Claims 1 to 5, **characterised in that** it comprises a step of quantising (25) and coding (26) the data of the lower part of the said transformed matrix.

7. Method for image coding according to Claim 6, **characterised in that** the said quantisation (25) belongs to the group comprising:

- uniform quantisation;
- zigzag-path quantisation, the quantisation step size being incremented as the path proceeds;
- quantisation based on at least one weighting matrix which is pre-evaluated or optimised for the image being processed.

8. Method for image coding according to any one of Claims 4 to 7, **characterised in that** the said scale factor $\alpha$, the quantisation type and/or the quantisation step size can be modified for each of the said triangles and/or for each of the said image portions.

9. Method for image coding according to any one of Claims 6 to 8, **characterised in that** it comprises a step of RLE and entropic coding (26) of the quantised data.

10. Method for image coding according to any one of Claims 1 to 9, **characterised in that** the said triangular partition is obtained according to a method which takes into account the content of the image or of the image portion.

11. Method for image coding according to Claim 10, **characterised in that** the said method belongs to the group comprising:

- methods based on fractal decomposition;
- so-called "matching-pursuit" methods;
- methods implementing an SADCT;
- methods implementing a DCT.

12. Method for image coding according to any one of Claims 1 to 11, **characterised in that** it is implemented (106) on image portions having a texture whose representation error is greater than a given threshold (103).

13. Method for image coding according to any one of Claims 1 to 12, **characterised in that** the said representation error corresponds to a deviation in luminance between the said source triangle and the triangle after reconstruction.

14. Method for image coding according to any one of Claims 1 to 13, **characterised in that** it is implemented on an error image, corresponding to the difference between a source image and an approximated image, which is obtained by implementing a separate prior coding method.

15. Method for image coding according to Claim 14, **characterised in that** the said prior coding method is a method of approximation by refinement implementing a hierarchical mesh, based on which a quaternary tree is constructed having as many levels as there are levels in the said hierarchical mesh, each of the said levels having a number of nodes equal to the number of triangles in the corresponding mesh level,
and **in that**, for the nodes satisfying a predetermined criterion (103), the said prior coding is replaced by coding according to any one of Claims 1 to 11.

16. Method for image coding according to Claim 15, **characterised in that** the said predetermined criterion is based on the deviation in luminance between the triangle of the approximated image and that of the source image.

17. Method for image coding according to Claim 16, **characterised in that**, for each node:

- a deviation in luminance is calculated between the image to be coded and the interpolated image based on the vertices of the nested mesh to which the node in question belongs;
- the said luminance deviation is compared with a threshold deviation;
- the following choice is made:

  - if the said luminance deviation is less than the said threshold deviation, the method of approximation by refining the hierarchical mesh is stopped for the node in question;
  - if the said luminance deviation is greater than the said threshold deviation, but less than a second threshold, the said method implementing (106) a hierarchical mesh continues (104) to be applied;
  - if the said luminance deviation is greater than the said second threshold, the coding method according to any one of Claims 1 to 11 is implemented.

18. Method for image coding according to Claim 17, **characterised in that** the said second threshold is equal to $k \times S$,

with:

k: real number greater than or equal to 1;
S: real value proportional to the mean-error luminance deviation.

**19.** Method for image coding according to any one of Claims 16 to 18, **characterised in that** the said luminance deviation represents a quadratic error or an absolute error between the said source triangle and the corresponding approximated triangle.

**20.** Method for decoding data representing an image coded according to a method comprising, for a domain corresponding to at least one image portion, the following steps:

- defining a minimum triangular partition covering the said domain;
- associating with each of the said source triangles a square matrix representing the said source triangle, with the aid of a reversible first transformation;
- applying a reversible decorrelating second transformation to each of the said square matrices, delivering transformed matrices,

**characterised in that** it comprises the following steps of reconstructing an approximation of the original image:

a) applying a transform which is the inverse of the said reversible decorrelating second transformation to the said transformed matrices, delivering the said reconstructed square matrices;
b) associating with each of the said reconstructed square matrices a corresponding reconstructed triangle, with the aid of an affine transformation which is the inverse of the said reversible first transformation;
c) reconstructing the said minimum partition, based on the said reconstructed triangles.

**21.** Decoding method according to Claim 20, **characterised in that** the said square matrices are recreated based on the data of a received bit stream, whose decoded data are the coefficients of the triangle to be reconstructed, which form the lower part of the said matrix.

**22.** Decoding method according to either one of Claims 20 and 21, **characterised in that** steps a), b) and c) are implemented on only a part of the received bit stream, the other part of the bit stream having been coded, and being decoded, according to another method.

**23.** Decoding method according to Claim 22, **characterised in that** the said bit stream comprises, on the one hand, data coded according to prior coding and, on the other hand, data coded with the aid of the said reversible transformations, the said decoding method comprising:

- prior decoding of the said data which were coded according to prior coding, making it possible to describe an initial representation;
- complementary decoding of the said data which were coded with the aid of the said reversible transformations, implementing the said steps a), b) and c), making it possible to refine the said initial representation.

**24.** Decoding method according to either one of Claims 22 and 23, **characterised in that**, with the said prior coding implementing hierarchical coding, the said prior decoding reads, from the received bit stream, at least one of the information items belonging to the group comprising:

- the number of levels in the hierarchy;
- identification of the coding technique used for each of the triangles;
- the sequence of differential values of the components associated with the nodes of the said hierarchical mesh;
- identification of the arcs on which diagonal inversion is carried out.

**Patentansprüche**

**1.** Verfahren zum Kodieren von Bildern, **dadurch gekennzeichnet, dass** es für einen Bereich, der mindestens einem Bildabschnitt entspricht, die folgenden Schritte umfasst:

- Definition (21) einer minimalen, den erwähnten Bereich abdeckenden Dreiecksaufteilung;
- Assoziieren einer Rechteckmatrix (34) zu jedem der oben erwähnten Quellendreiecke, die für dieses Quellendreieck (31) repräsentativ ist, mit Hilfe einer ersten umkehrbaren Transformation (22, 23);
- Anwenden (24) einer zweiten umkehrbaren Dekorrelierungstransformation auf jede der Rechteckmatrizen, wobei transformierte Matrizen entstehen.

2. Verfahren zum Kodieren von Bildern nach Anspruch 1, **dadurch gekennzeichnet, dass** der Assoziierungsschritt einer Rechteckmatrix die folgenden Schritte umfasst:

- affine Transformation (32) eines Quellendreiecks (31) in ein Referenzdreieck genanntes, gleichschenkliges rechtwinkliges Dreieck (33);
- Erzeugen (36) einer Rechteckmatrix (34), deren unterer Teil die repräsentativen Daten des erwähnten gleichschenkligen rechtwinkligen Dreieck (33) enthält;
- Symmetrisieren (35) der erwähnten Rechteckmatrix.

3. Verfahren zum Kodieren von Bildern nach Anspruch 2, **dadurch gekennzeichnet, dass** der Schritt (36) zum Erzeugen einer Rechteckmatrix einen Skalenfaktor $\alpha$ anwendet, der ein räumliches Strecken oder Komprimieren ermöglicht.

4. Verfahren zum Kodieren von Bildern nach Anspruch 3, **dadurch gekennzeichnet, dass** die erwähnte Rechteckmatrix $E(\alpha \times \sqrt{2 \times A})$ Zeilen aufweist, wobei E den gesamten oberen Teil darstellt und A die Fläche des gleichschenkligen rechtwinkligen Dreiecks ist.

5. Verfahren zum Kodieren von Bildern nach einem der Ansprüche 1 bis 4, **dadurch gekennzeichnet, dass** die zweite Transformation der Gruppe angehört, die folgendes umfasst:

- die Karhunen-Loève Transformation (KLT);
- die diskrete Fourier Transformation (DFT);
- die diskrete Cosinustransformation (DCT);
- die Walsh-Hadamard Transformation (WHT).

6. Verfahren zum Kodieren von Bildern nach einem der Ansprüche 1 bis 5, **dadurch gekennzeichnet, dass** es einen Quantifizierungs- (25) und einen Datenkodierungsschritt (26) der Daten aus dem unteren Teil der transformierten Matrix umfasst.

7. Verfahren zum Kodieren von Bildern nach Anspruch 6, **dadurch gekennzeichnet, dass** die Quantifizierung (25) der Gruppe angehört, die folgendes umfasst:

- eine gleichmäßige Quantifizierung (quantification uniforme);
- eine Quantifizierung mit Zickzack-Wegstrecke, wobei jeder Quantifizierungsschritt im Verlauf der erwähnten Wegstrecke inkrementiert wird;
- eine Quantifizierung, die auf mindestens einer für das verarbeitete Bild im Voraus geschätzten oder optimierten Wichtungsmatrix beruht.

8. Verfahren zum Kodieren von Bildern nach einem der Ansprüche 4 bis 7, **dadurch gekennzeichnet, dass** der erwähnte Skalenfaktor $\alpha$, die Quantifizierungsart und/oder der Quantifizierungsschritt für ein jedes der erwähnten Dreiecke und/oder für jeden der erwähnten Bildabschnitte, geändert werden können.

9. Verfahren zum Kodieren von Bildern nach einem der Ansprüche 6 bis 8, **dadurch gekennzeichnet, dass** es einen lauflängenkodierten (RLE) und entropischen Kodierungsschritt (26) der quantifizierten Daten umfasst.

10. Verfahren zum Kodieren von Bildern nach einem der Ansprüche 1 bis 9, **dadurch gekennzeichnet, dass** die Dreiecksaufteilung nach einer Methode erfolgt, die den Inhalt des Bildes oder des Bildabschnitts berücksichtigt.

11. Verfahren zum Kodieren von Bildern nach Anspruch 10, **dadurch gekennzeichnet, dass** die Methode der Gruppe angehört, die folgendes umfasst:

- die auf Fraktalaufteilung basierende Methoden;

- die "matching pursuit" genannten Methoden;
- die Methoden, die eine SADCT anwenden;
- die Methoden, die eine DCT anwenden.

12. Verfahren zum Kodieren von Bildern nach einem der Ansprüche 1 bis 11, **dadurch gekennzeichnet, dass** es auf Bildabschnitte angewandt wird (106), deren Textur einen Darstellungsfehler aufweist, der größer als ein gegebener Schwellenwert (103) ist.

13. Verfahren zum Kodieren von Bildern nach einem der Ansprüche 1 bis 12, **dadurch gekennzeichnet, dass** der erwähnte Darstellungsfehler einer Abweichung der Helligkeit (luminance) zwischen dem erwähnten Quellendreieck und dem Dreieck nach seiner Wiederherstellung entspricht.

14. Verfahren zum Kodieren von Bildern nach einem der Ansprüche 1 bis 13, **dadurch gekennzeichnet, dass** es auf ein Fehlerbild angewandt wird, das der Differenz zwischen einem Quellenbild und einem angenäherten Bild entspricht, welches durch Anwendung eines vorausgehenden verschiedenen Kodierverfahrens erhalten wird.

15. Verfahren zum Kodieren von Bildern nach Anspruch 14, **dadurch gekennzeichnet, dass** das erwähnte vorausgehende Kodierungsverfahren ein Annäherungsverfahren durch Verfeinerung ist, das eine hierarchische Vernetzung anwendet, auf der Grundlage derer ein quaternärer Baum aufgebaut werden kann, der dieselbe Zahl von Ebenen wie die der hierarchischen Vernetzung aufweist, wobei jede dieser Ebenen dieselbe Zahl von Knoten wie die Zahl der Dreiecke in der entsprechenden Vernetzungsebene aufweist und dadurch, dass für die Knoten, die einem vorgegebenen Kriterium (103) entsprechen, die vorausgehende Kodierung durch eine Kodierung nach einem der Ansprüche 1 bis 11 ersetzt wird.

16. Verfahren zum Kodieren von Bildern nach Anspruch 15, **dadurch gekennzeichnet, dass** das vorgegebene Kriterium auf der Helligkeitsabweichung zwischen dem Dreieck des angenäherten Bildes und dem des Quellenbildes beruht.

17. Verfahren zum Kodieren von Bildern nach Anspruch 16, **dadurch gekennzeichnet, dass** für jeden Knoten:

- die Berechnung der Abweichung der Helligkeit zwischen dem zu kodierenden Bild und dem auf der Grundlage der verschachtelten Vernetzungsknoten (sommets du maillage), zu welchem der betrachtete Knoten gehört, interpoliertem Bild, erfolgt;
- die erwähnte Helligkeitsabweichung mit einer Schwellenabweichung verglichen wird;
- die folgende Wahl getroffen wird:

- wenn die erwähnte Helligkeitsabweichung kleiner als der Abweichungsschwellenwert ist, so wird das Annäherungsverfahren durch Verfeinerung der hierarchischen Vernetzung für den betrachteten Knoten unterbrochen;
- wenn die erwähnte Helligkeitsabweichung größer als die erwähnte Schwellenwertabweichung, aber kleiner als ein zweiter Schwellenwert ist, so wird das eine hierarchische Vernetzung anwendende Verfahren (106) fortgesetzt (104);
- wenn die erwähnte Helligkeitsabweichung größer ist als der zweite Schwellenwert, so wird das Kodierungsverfahren nach einem der Ansprüche 1 bis 11 angewandt.

18. Verfahren zum Kodieren von Bildern nach Anspruch 17, **dadurch gekennzeichnet, dass** der zweite Schwellenwert k x S beträgt, wobei:

k: eine reelle Zahl größer oder gleich 1 ist;
S: der reelle Wert ist, der proportional zur mittleren Helligkeitsabweichung ist.

19. Verfahren zum Kodieren von Bildern nach einem der Ansprüche 16 bis 18, **dadurch gekennzeichnet, dass** die erwähnte Helligkeitsabweichung ein quadratischer Fehler oder ein Absolutfehler zwischen dem erwähnten Quellendreieck und dem entsprechenden angenäherten Dreieck ist.

20. Verfahren zum Dekodieren von Daten, die ein Bild repräsentieren, das nach einem Verfahren kodiert wurde, welches für einen Bereich, der mindestens einem Bildabschnitt entspricht, die folgenden Schritte umfasst

- Definition einer minimalen, den erwähnten Bereich abdeckenden Dreiecksaufteilung;
- Assoziieren einer Rechteckmatrix zu jedem der Quellendreiecke, die für dieses Quellendreieck repräsentativ ist, mit Hilfe einer ersten umkehrbaren Transformation;
- Anwenden einer zweiten umkehrbaren Dekorrelierungstransformation auf jede der Rechteckmatrizen, wobei transformierte Matrizen entstehen,

**dadurch gekennzeichnet, dass** es die folgenden Wiederherstellungsschritte eines angenäherten Ausgangsbildes umfasst:

a) Anwenden einer zur zweiten umkehrbaren Dekorrelierungstransformation inversen Transformation auf die transformierten Matrizen, wobei die rekonstruierten Rechteckmatrizen erzeugt werden;

b) Assoziieren eines entsprechenden wiederhergestellten Dreiecks zu einer jeden der erwähnten wiederhergestellten Rechteckmatrizen mit Hilfe einer affinen Umkehrtransformation der erwähnten ersten umkehrbaren Transformation;

c) Wiederherstellen der erwähnten minimalen Aufteilung, ausgehend von den wiederhergestellten Dreiecken.

21. Dekodierverfahren nach Anspruch 20, **dadurch gekennzeichnet, dass** die erwähnten Rechteckmatrizen aus den Daten eines empfangenen binären Datenstrom wiederhergestellt werden, deren dekodierte Daten die Koeffizienten des wiederherzustellenden Dreiecks sind, wobei diese Daten den unteren Teil der erwähnten Matrix bilden.

22. Dekodierverfahren nach einem der Ansprüche 20 und 22, **dadurch gekennzeichnet, dass** die Schritte a), b) und c) nur auf einen Teil des empfangenen binären Datenstroms angewendet werden, wobei der andere Teil des binären Datenstroms nach einem anderen Verfahren kodiert und dekodiert wird.

23. Dekodierverfahren nach Anspruch 22, **dadurch gekennzeichnet, dass** der erwähnte binäre Datenstrom einerseits die nach einem im voraus festgelegten Kodierverfahren kodierten Daten und andererseits Daten umfasst, die mit Hilfe der erwähnten umkehrbaren Transformationen kodiert wurden, wobei dieses Dekodierverfahren folgendes umfasst:

- eine vorausgehende Dekodierung der nach einem vorausgehenden Verfahren kodierten Daten, die das Beschreiben einer Ausgangsdarstellung ermöglichen;
- eine komplementäre Dekodierung (décodage complementaire) der erwähnten kodierten Daten mit Hilfe der erwähnten umkehrbaren Transformationen, welche die Schritte a), b) und c) anwenden, mit denen die Ausgangsdarstellung verfeinert werden kann.

24. Dekodierverfahren nach einem der Ansprüche 22 und 23, **dadurch gekennzeichnet, dass** die vorausgehende Kodierung eine hierarchische Kodierung anwendet, und dass die erwähnte vorhergehende Dekodierung das Lesen im empfangenen binären Datenstrom von mindestens einer der Informationen aus der Gruppe zulässt, die Folgendes umfasst:

- die Zahl der hierarchischen Ebenen;
- das Identifizieren der für ein jedes Dreieck angewandten Kodiertechnik;
- die Reihenfolge der mit den Knoten der erwähnten hierarchischen Vernetzung assoziierten differentiellen Werte;
- das Identifizieren der Bögen, über welche eine Umkehrung der Diagonalen durchgeführt wird.

Image

Bloc

Transformation

Bloc transformé

Quantification

Codage

Transmission

11  12  13  14  15  16  17

<u>Fig. 1</u>

EP 1 181 668 B1

31  32  33  36  35

Symétrisation

34

<u>Fig. 3</u>

| Identification des éléments triangulaires à coder | 21 |

| Transformation affine vers un triangle rectangle isocèle par interpolation bilinéaire | 22 |

| Symétrisation en vue du remplissage d'une matrice carré associée | 23 |

| Transformation par DCT nXn | 24 |

| Quantification de la partie triangulaire inférieure | 25 |

| Parcours Zigzag adapté et codage entropique des coefficients | 26 |

Fig. 2

Fig. 4

$Q_{DC}$

$Q^0_{AC}$

51

$\Delta Q^+_{AC}$

$\Delta Q^+_{AC}$

$\Delta Q^+_{AC}$   $\Delta Q^+_{AC}$   $\Delta Q^+_{AC}$   $\Delta Q^+_{AC}$

Fig. 5

| 16 | | | | | | | |
|----|----|----|----|-----|-----|-----|----|
| 12 | 12 | | | | | | |
| 14 | 13 | 16 | | | | | |
| 14 | 17 | 22 | 29 | | | | |
| 18 | 22 | 37 | 56 | 68 | | | |
| 24 | 35 | 55 | 64 | 81 | 104 | | |
| 49 | 64 | 78 | 87 | 103 | 121 | 120 | |
| 72 | 92 | 95 | 98 | 112 | 100 | 103 | 99 |

Fig. 6

71

Fig. 7

Fig. 8

Fig. 9

Fig. 10